# DEMANDE DE BREVET EUROPEEN

(11) **EP 1 216 641 A1**
(43) Date de publication de la demande: **26.06.2002**
(21) Numéro de dépôt: 01420236.0
(22) Date de dépôt: 14.12.2001
(51) Int. Cl.: A47J 36/38, A47J 37/12

(54) **Appareil de cuisson comportant un couvercle pivotant équipé d'un dispositif de récupération des condensats**

(30) Priorité: 22.12.2000 FR 0016985
(71) Demandeur: SEB S.A., 69130 Ecully (FR)
(72) Inventeur: Bruat, Bernard, 21220 Chevannes (FR); Bouly, Bernard, 21000 Dijon (FR)
(74) Mandataire: Kiehl, Hubert

(57) **Abrégé**

- L'invention concerne un appareil de cuisson, en particulier friteuse, comportant une enceinte de cuisson (17) comprenant une cuve (2) fermée par un couvercle (3) monté pivotant, le couvercle (3) comprenant une paroi intérieure (6) inclinée vers une rigole (19) lorsque le couvercle (3) occupe une position abaissée fermant la cuve (2).
- Conformément à l'invention, la rigole (19) est adjacente à la périphérie inférieure de la paroi intérieure (6) du couvercle (3) occupant une position relevée, et une ouverture (7) ménagée dans la périphérie inférieure de la paroi intérieure (6) communique par un passage (16) avec un réservoir (11).

## Description

La présente invention se rapporte au domaine technique général des appareils de cuisson comportant une cuve fermée par un couvercle pivotant comportant une ouverture pour l'évacuation de la vapeur, et concerne plus particulièrement mais non exclusivement les friteuses, notamment les friteuses électriques.

Lors de la cuisson une partie de la vapeur se condense sur la face inférieure du couvercle. Une partie des condensats ainsi formés peut retomber dans le bain de cuisson pendant la cuisson ou lors de l'ouverture du couvercle. Une telle situation est particulièrement gênante dans une friteuse car l'introduction d'eau dans un bain de matière grasse chaude peut provoquer des projections, voire une émulsion.

Il a été proposé dans le document FR 2 239 224 de recueillir les condensats à l'extérieur du couvercle. Le couvercle comporte une enveloppe extérieure comportant une ouverture pour l'évacuation de la vapeur et un pare-vapeur intérieur perforé. Une cartouche est disposée dans l'ouverture de l'enveloppe extérieure. Un passage est ménagé à proximité de l'articulation du couvercle sur le boîtier entre le pare-vapeur et l'enveloppe extérieure, pour permettre aux condensats de s'écouler par gravité dans un réceptacle disposé à l'extérieur du boîtier lorsque le couvercle est relevé. Une telle solution est toutefois peu pratique pour l'utilisateur et onéreuse à réaliser.

Il a été proposé dans le document EP 0 028 190 de disposer un corps absorbant dans une gorge ouverte vers l'intérieur d'un couvercle pivotant sur le bord supérieur d'un récipient, pour recueillir les condensats lorsque le couvercle est relevé. Une telle solution est peu satisfaisante car le corps absorbant est disposé au dessus du récipient de cuisson lorsque le couvercle est abaissé. Le corps absorbant est ainsi placé dans une zone chaude propice au développement des microbes.

L'objet de la présente invention est de proposer un appareil de cuisson comportant une cuve et un couvercle pivotant, dans lequel les condensats peuvent être collectés de manière sûre.

Un autre objet de la présente invention est de proposer un appareil de cuisson comportant une cuve et un couvercle pivotant, présentant une construction peu onéreuse et permettant la collecte des condensats.

Ces objets sont atteints avec un appareil de cuisson, en particulier friteuse, comportant une enceinte de cuisson comprenant une cuve fermée par un couvercle monté pivotant, le couvercle comprenant une paroi intérieure, une ouverture étant ménagée dans la périphérie de la paroi intérieure dans la partie inférieure de ladite périphérie lorsque le couvercle occupe une position relevée, un passage communiquant avec un réservoir étant disposé sous l'ouverture lorsque le couvercle occupe une position relevée, du fait que le couvercle comporte une rigole ménagée dans l'enceinte de cuisson, la rigole étant adjacente à la périphérie inférieure de la paroi intérieure du couvercle occupant une position relevée, l'ouverture présentant, lorsque le couvercle est en position relevée, un point bas situé plus bas qu'un point bas du bord libre de la rigole. Cette disposition permet de transférer les condensats recueillis dans la rigole vers le réservoir lorsque le couvercle est relevé. La diminution de la quantité de condensats restant dans la rigole permet d'éviter la retombée de condensats dans le bain de friture lorsque le couvercle est abaissé.

Selon une disposition avantageuse facilitant le nettoyage et simplifiant la réalisation de l'appareil, le réservoir est formé par des parois appartenant au couvercle.

Selon une autre disposition avantageuse facilitant la récupération des condensats lors de la cuisson, la paroi intérieure comporte une face externe inclinée vers la rigole lorsque le couvercle occupe une position abaissée fermant la cuve.

Selon une autre disposition avantageuse facilitant la récupération des condensats lors de la cuisson, la rigole est périphérique.

Selon une autre disposition avantageuse la rigole est formée au moins partiellement par un joint. La rigole peut ainsi être obtenue de manière peu onéreuse.

Selon une autre disposition avantageuse facilitant l'évacuation des condensats, l'ouverture présente, lorsque le couvercle est en position relevée, un point bas situé plus bas qu'un point bas du bord libre de la rigole.

Selon une autre disposition avantageuse, les parois du réservoir et la paroi intérieure sont réalisées par moulage d'une pièce en matière plastique. L'obtention du réservoir est ainsi peu onéreuse. De plus les formes appropriées à la collecte des condensats sont aisément obtenues.

Selon une autre disposition avantageuse permettant de limiter les émissions d'odeurs, le réservoir est agencé dans un conduit du couvercle communiquant avec l'enceinte de cuisson par l'ouverture, le conduit étant obturé par une cartouche filtrante.

Avantageusement alors la cartouche présente dans le conduit une face inférieure inclinée en direction du réservoir lorsque le couvercle est en position abaissée. Cette disposition permet pendant une cuisson effectuée avec un couvercle en position abaissée de recueillir dans le réservoir les condensats formés sur la face inférieure de la cartouche.

Avantageusement la face inférieure de la cartouche forme une partie des parois du réservoir lorsque le couvercle est en position relevée. Cette disposition facilite la réalisation du réservoir, car elle permet un moulage plus simple et/ou évite l'assemblage d'une pièce supplémentaire.

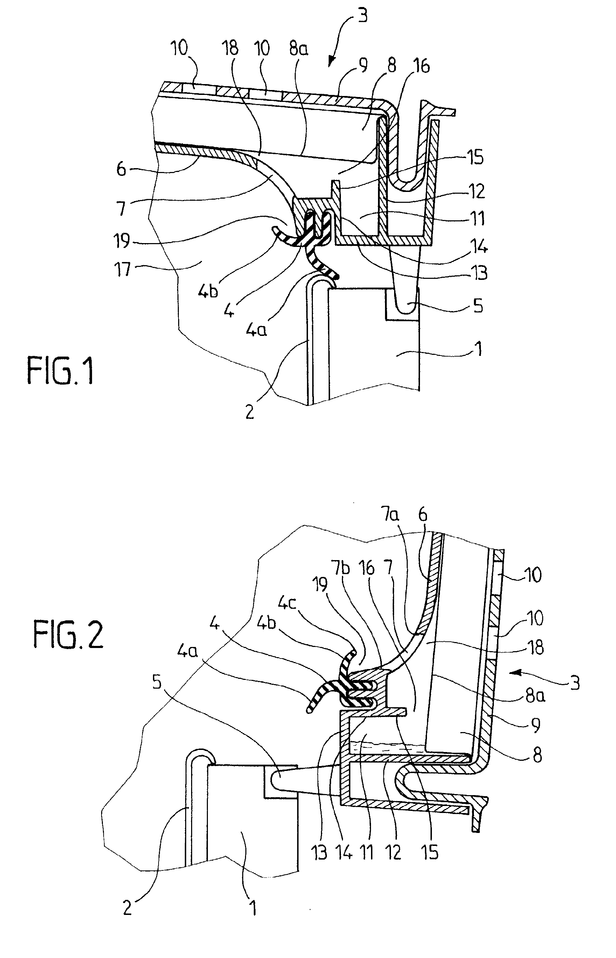

L'invention sera mieux comprise à l'étude d'un exemple de réalisation, pris à titre nullement limitatif, et illustré dans les figures 1 et 2 annexées présentant une section verticale schématique partielle d'une friteuse comportant un couvercle comprenant un dispositif de récupération des condensats, respectivement en position abaissée et en position relevée du couvercle.

Les figures 1 et 2 montrent une friteuse électrique comportant une enceinte de cuisson 17 comprenant une cuve 2 fermée par un couvercle 3 monté pivotant. La cuve 2 est agencée dans un boîtier 1. Le couvercle 3 présente une articulation 5 avec le boîtier 1. Le couvercle 3 peut être déplacé entre une position abaissée, représentée à la figure 1, et une position relevée, représentée à la figure 2.

Le couvercle 3 comporte un joint 4 entourant une paroi intérieure 6. La paroi intérieure 6 est légèrement bombée pour favoriser l'écoulement des condensats vers la périphérie de la paroi. Un joint 4 entoure la paroi intérieure 6. Le joint 4 présente une lèvre extérieure 4a prenant appui sur le rebord de la cuve 2 lorsque le couvercle 3 est en position abaissée, et une lèvre intérieure 4b relevée en direction de la paroi intérieure 6. La lèvre extérieure 4a forme avec la périphérie de la paroi intérieure 6 une rigole 19 périphérique. La cuve 2 forme avec le joint 4 et la paroi intérieure 6 une enceinte de cuisson 17 lorsque le couvercle 3 est en position abaissée. La paroi 6 comporte une ouverture 7 permettant notamment le passage de la vapeur dégagée lors de la cuisson. Tel que bien visible à la figure 1, la rigole 19 est agencée à l'intérieur de l'enceinte de cuisson 17.

Une cartouche filtrante 8 est disposée sur la face extérieure de la paroi intérieure 6. La cartouche 8 présente une face inférieure 8a logée dans un conduit 18 communiquant avec l'ouverture 7. Une paroi extérieure 9 amovible par rapport à la paroi intérieure 6 ferme le conduit 18 et permet l'échange de la cartouche 8. Des découpes 10 ménagées dans la paroi 9 permettent la sortie de la vapeur issue de la cartouche 8 à l'extérieur de l'appareil. La cartouche 8 comporte par exemple une enveloppe métallique perforée dans laquelle sont disposés des granulés de charbon actif. La cartouche 8 obture le conduit 18 pour limiter les fuites entre le conduit 18 et la cartouche, voire pour les éviter.

Le couvercle 3 comporte un réservoir 11 prévu pour la récupération des condensats. Le réservoir 11 comporte une paroi de base 12, disposée verticalement entre l'articulation 5 et la cartouche 8 lorsque le couvercle 3 occupe une position relevée, une paroi de fond 13, et une paroi 14 disposée horizontalement entre la paroi de base 12 et l'ouverture 7 lorsque le couvercle 3 occupe une position abaissée. Lorsque le couvercle est en position relevée, la face inférieure 8a de la cartouche 8 forme une paroi latérale du réservoir 11. La paroi intérieure 6 et les parois 12, 13, 14 du réservoir peuvent être réalisées par moulage d'une pièce en matière plastique. L'étanchéité entre la paroi 12 et la cartouche 8 peut n'être que partielle.

La paroi 14 forme en sa partie supérieure une nervure 15 ménageant avec la cartouche 8 un passage 16 de telle sorte qu'un point haut 7a de l'ouverture 7 soit disposé verticalement au dessus du passage 16 lorsque le couvercle 3 est en position relevée. La paroi intérieure 6 présente un dévers en direction du réservoir 11 lorsque le couvercle 3 occupe la position relevée. L'ouverture 7 présente lorsque le couvercle 3 est en position relevée un point bas 7b situé plus bas qu'un point bas 4c du sommet de la lèvre intérieure 4b formant le bord libre de la rigole 19.

Le fonctionnement de l'appareil est le suivant.

Lors de la cuisson, de la vapeur se dégage dans la cuve 2 et s'échappe vers le conduit 18 par l'ouverture 7 ou par d'autres ouvertures ménagées dans la paroi 6. La vapeur est ensuite filtrée par la cartouche 8 et sort à l'extérieur de l'appareil par les découpes 10. Une partie des condensats déposés sur la face intérieure de la paroi 6 peuvent s'écouler vers la lèvre intérieure 4b grâce à la forme bombée de la paroi 6, et sont ainsi recueillis dans la rigole 19.

Lorsque l'utilisateur relève le couvercle 3, les gouttes de condensation formées sur la face intérieure de la paroi 6 se déplacent vers l'ouverture 7 et tombent par le passage 16 dans le réservoir 11. Lorsque le couvercle 3 est en position relevée, la paroi supérieure de la nervure 15 présente une légère pente vers l'extrémité de ladite nervure, ce qui permet aux condensats de s'écouler vers le réservoir 11. Tel que montré à la figure 2, la rigole 19 est adjacente à la périphérie inférieure de la paroi intérieure 6 du couvercle 3 occupant une position relevée. La lèvre 4b du joint 4 formant la rigole 19 permet de recueillir les condensats ayant contourné l'ouverture 7. La hauteur de la lèvre 4b permet d'assurer un écoulement des condensats par l'ouverture 7, par capillarité ou par gravité jusqu'au réservoir 11.

Lorsque l'utilisateur rabat le couvercle 3, les condensats ayant traversé le passage 16 sont retenus dans le réservoir 11. La chute des condensats dans la cuve 2 est ainsi évitée.

A titre de variante, la rigole peut ne pas être périphérique. La paroi 6 est alors inclinée en direction de la rigole pour favoriser la collecte des condensats.

A titre de variante, la rigole peut être distincte du joint. Une telle solution peut être plus compliquée à réaliser mais permet un meilleur écoulement des condensats. Le joint peut alors être supprimé si désiré.

A titre de variante, le réservoir 11 peut comporter une paroi complémentaire reliant la paroi de base 12 à la cartouche filtrante 8. Une telle disposition permet de favoriser la retenue des condensats lorsque le couvercle est en position relevée.

A titre de variante, le réservoir 11 peut être ménagé dans ou sur le boîtier de l'appareil, ou à l'extérieur de la cuve de l'appareil, le contenu de la rigole étant alors déversé dans le réservoir lorsque le couvercle est relevé.

La présente invention n'est nullement limitée à l'exemple de réalisation décrit et à ses variantes, mais englobe de nombreuses modifications dans le cadre des revendications.

## Revendications

1. Appareil de cuisson, en particulier friteuse, comportant une enceinte de cuisson (17) comprenant une cuve (2) fermée par un couvercle (3) monté pivotant, le couvercle (3) comprenant une paroi intérieure (6), une ouverture (7) étant ménagée dans la périphérie de la paroi intérieure (6) dans la partie inférieure de ladite périphérie lorsque le couvercle (3) occupe une position relevée, un passage (16) communiquant avec un réservoir (11), étant disposé sous l'ouverture (7) lorsque le couvercle (3) occupe une position relevée, **caractérisé en ce que** le couvercle (3) comporte une rigole (19) ménagée dans l'enceinte de cuisson (17), la rigole (19) étant adjacente à la périphérie inférieure de la paroi intérieure (6) du couvercle (3) occupant une position relevée, l'ouverture (7) présentant, lorsque le couvercle (3) est en position relevée, un point bas (7b) situé plus bas qu'un point bas (4c) du bord libre de la rigole (19).

2. Appareil de cuisson selon la revendication 1, **caractérisé en ce que** le réservoir (11) est formé par des parois (12, 13, 14) appartenant au couvercle (3).

3. Appareil de cuisson selon l'une des revendications 1 ou 2, **caractérisé en ce que** la paroi intérieure (6) comporte une face externe inclinée vers la rigole (19) lorsque le couvercle (3) occupe une position abaissée fermant la cuve (2).

4. Appareil de cuisson selon l'une des revendications 1 à 3, **caractérisé en ce que** la rigole (19) est périphérique.

5. Appareil de cuisson selon l'une des revendications 1 à 4, **caractérisé en ce que** la rigole (19) est formée au moins partiellement par un joint (4).

6. Appareil de cuisson l'une des revendications 2 à 5, **caractérisé en ce que** les parois (12, 13, 14) du réservoir (11) et la paroi intérieure (6) sont réalisées par moulage d'une pièce en matière plastique.

7. Appareil de cuisson selon l'une des revendications 2 à 6, **caractérisé en ce que** le réservoir (11) est agencé dans un conduit (18) du couvercle (3) communiquant avec l'enceinte de cuisson (17) par l'ouverture (7), le conduit étant obturé par une cartouche filtrante (8).

8. Appareil de cuisson selon la revendication 7, **caractérisé en ce que** la cartouche filtrante (8) présente dans le conduit (18) une face inférieure (8a) inclinée en direction du réservoir (11) lorsque le couvercle (3) est en position abaissée.

9. Appareil de cuisson selon l'une des revendications 7 ou 8, **caractérisé en ce que** la face inférieure (8a) de la cartouche (8) forme une partie des parois du réservoir (11) lorsque le couvercle (3) est en position relevée.
